# EUROPÄISCHE PATENTSCHRIFT

(11) **EP 0 796 514 B1**
(45) Veröffentlichungstag und Bekanntmachung des Hinweises auf die Patenterteilung: **30.09.1998**
(21) Anmeldenummer: 95940161.3
(22) Anmeldetag: 30.11.1995
(51) Int. Cl.: H02B 13/02

(54) **GASISOLIERTE LEISTUNGSSCHALTER-ANLAGE**
GAS-INSULATED CIRCUIT BREAKER ARRANGEMENT
SYSTEME A DISJONCTEURS DE PUISSANCE ISOLE PAR GAZ

(30) Priorität: 05.12.1994 DE 9420193 U
(43) Veröffentlichungstag der Anmeldung: 24.09.1997
(73) Patentinhaber: SIEMENS AKTIENGESELLSCHAFT, 80333 München (DE)
(72) Erfinder: FLEISCHER, Lennart, D-91315 Höchstadt (DE); MÜLLER, Hans-Joachim, D-61191 Rosbach (DE); POTH, Rainer, D-61118 Bad Vilbel (DE); SPÄCK, Helmut, D-63739 Aschaffenburg (DE)
(86) Internationale Anmeldenummer: DE9501767
(87) Internationale Veröffentlichungsnummer: WO9618225

(56) Entgegenhaltungen:
- EP-A- 0 564 057
- EP-A- 0 582 828
- DE-U- 9 420 193
- BROWN BOVERI REVIEW, Bd. 73, Nr. 11, November 1986 BADEN, CH, Seiten 629-637, J. GRÄFLING ET AL. 'Medium-Voltage Switchgear EAK with Vacuum Circuit-Breakers and SF6 Gas Insulation'

## Beschreibung

Die Erfindung betrifft eine gasisolierte Leistungsschalter-Anlage mit Sammelschienen und mit im gasdicht verschlossenen Behälter mit geschlossenem Gassystem angeordneten Dreistellungsschaltern und Vakuum-Leistungsschaltern, wobei der Behälter Durchführungen für elektrische und mechanische Anschlüsse, insbesondere für Kabel und Antriebsmittel, aufweist, die Antriebsmittel für den Dreistellungsschalter und die Antriebsmittel für die Vakuum-Leistungsschalter außerhalb des Behälters angeordnet und von der Vorderseite der Leistungsschalter-Anlage zugänglich sind und die Kabelanschlüsse unterhalb der Vakuum-Leistungsschalter außerhalb des Behälters angeordnet und von der Vorderseite der Leistungsschalter-Anlage zugänglich sind, sowie mit einem Meß-, Prüf- und Verteilzwecken dienenden Niederspannungsschrank.

Eine derartigen Leistungsschalter-Anlage ist aus der DE-PS 42 11 154 bekannt. In dem gasgefüllten Behälter sind im oberen Teil die Vakuum-Leistungsschalter angebracht und durch entsprechende Stromschienen mit den darunterliegenden Dreistellungsschaltern verbunden. Über entsprechende Durchführungen werden die Kabelabgänge frontseitig herausgeführt. Unterhalb der Dreistellungsschalter sind die Durchführungen zum Anschluß der außenliegenden Sammelschienen vorgesehen, die mittels weiterer im Behälter befindlichen Stromschienen mit den jeweiligen Vakuum-Leistungsschaltern verbunden sind. Sämtliche Durchführungen sind frontseitig aus dem Behälter herausgeführt.
Die der Erfindung zugrundeliegende Aufgabe besteht darin, die gasisolierte Leistungsschalter-Anlage in ihrer Bauform kompakter zu gestalten und insbesondere die Lage der einzelnen Funktionselemente zu einander zu optimieren, wobei die elektrisch und mechanisch bedingten Betriebsbedingungen ohne Einschränkungen gewährleistet sein müssen. Erfindungsgemäß wird dies durch folgende Merkmale erreicht:
1.1. die Sammelschienen sind oberhalb des Behälters hinter dem Niederspannungsschrank angeordnet,
1.2. die Dreistellungsschalter sind im oberen Bereich des Behälters angeordnet und unmittelbar mit dem darunter positionierten Vakuum-Leistungsschalter verbunden,
1.3. die Kabelanschlüsse sind mit einer unterhalb des Behälters herausführenden Anschlußbuchse zum Anschluß eines Spannungswandlers bzw. eines Überspannungs-Ableiters verbunden.

Mit der Anwendung eines geschlossenen Gassystems für den Behälter sind in der vorgeschriebenen Mindestlebensdauer solcher Anlagen keine Gasnachfüllungen erforderlich. Mit der Anordnung der Sammelschienen oberhalb des Behälters, die über entsprechende Durchführungen unmittelbar mit den innerhalb des Behälters angeordneten Dreiwegeschaltern verbunden sind, sind relativ kurze Stromschienen einsetzbar. Dies trifft ebenso für die unterhalb der Dreistellungsschalter angeordneten Vakuum-Leistungsschalter zu, so daß insgesamt eine Verkleinerung des Behälters gegenüber den Behältern der bekannten Leistungsschalter-Anlagen erreicht ist.
Als besonders vorteilhaft ist anzusehen, daß bei dieser Zuordnung der einzelnen Funktionsteile die fronseitige Anordnung der Antriebsmittel und deren problemlose Bedienungen von der Vorderseite der Leistungsschalter-Anlage beibehalten werden kann. Auch die Kabelanschlüsse, die über entsprechende Durchführungen unterhalb der Vakuum-Leistungsschalter liegen, sind weiterhin von der Frontseite her zugänglich, so daß der Leistungsschalter-Anlage die Kabel direkt von unten zugeführt werden können. Auch die Anordnung des Niederspannungsschrankes vor der Sammelschiene ist der kompakten Bauweise der Leistungsschalter-Anlage förderlich und läßt eine einfache Bedienbarkeit zu.
An den Anschlußbuchsen unterhalb des Behälters lassen sich in einfacher Weise Spannungswandler bzw. Überspannungs-Ableiter anschließen.

Gemäß einer vorteilhaften Ausgestaltung der Erfindung ist das folgende Merkmal vorgesehen:
2.1. die Kabelanschlüsse sind jeweils mit einer Rohrverlängerung zum Anschluß von Doppelkabeln ausgestattet,
so daß mehrere Kabel an einem Kabelanschluß anschließbar sind.

Eine weitere vorteilhafte Ausgestaltung der Erfindung sieht vor, daß die Sammelschienen durch Doppelsammelschienen zu ersetzen sind, was ohne konstruktive Veränderungen der Leistungsschalter-Anlage möglich ist.

Die Erfindung wird durch ein figürlich dargestellte Ausführungsbeispiel näher erläutert, in dem in vereinfachter Weise eine Leistungsschalter-Anlage in Vorderansicht und offener Seitenansicht dargestellt ist.

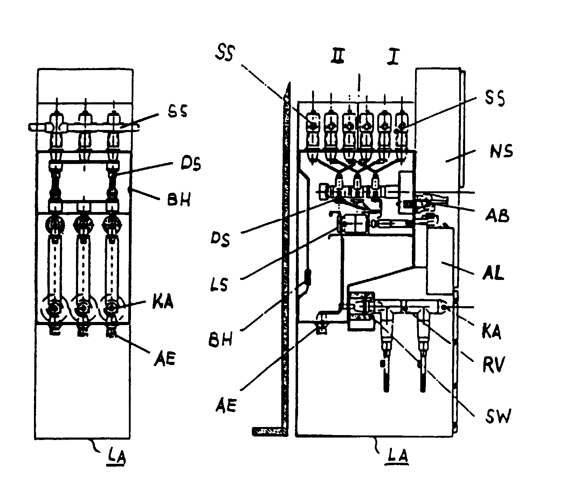

Die Figur zeigt die Leistungsschalter-Anlage LA im linken Bereich in der Vorderansicht und im rechten Bereich in der offenen Seitenansicht. Im Einzelnen ist erkennbar, daß die Sammelschienen SS oberhalb des Behälters BH angeordnet sind. Der Dreistellungsschalter DS und die Vakuum-Leistungsschalter LS befinden sich innerhalb des Behälters BH der praktisch ein geschlossenes Gassystem darstellt. Die außen liegenden Sammelschienen SS sind über nicht bezeichnete Durchführungen mit den entsprechenden Kontaktanschlüssen des Dreistellungsschalter DS verbunden. Über ebenfalls nicht bezeichnete Stromschienen steht der Dreistellungsschalter mit den Vakuum-Leistungsschaltern LS in Verbindung, die über weitere ebenfalls nicht bezeichnete Stromschienen über entsprechende Durchführungen als Anschlußbuchse AE unterhalb des Behälters BH und als Kabelanschluß KA frontseitig aus dem Behälter BH herausgeführt sind. Der Kabelanschluß KA kann einen Stromwandler SW aufnehmen und durch eine Rohrverlängerung RV so ausgestattet sein, daß mehrere Kabel angeschlossen werden können. Weiterhin ist ersichtlich, daß sich vor dem Sammelschienen SS der Niederspannungsschrank NS außerhalb des Behälters BH befindet, und unter diesem Niederspannungsschrank NS das Antriebsmittel AB für den Dreistellungsschalter DS und darunter das Antriebsmittel AL für die Vakuum-Leistungsschalter LS angeordnet sind. Die Bereiche I und II oberhalb der Sammelschienen SS deuten an, daß die Leistungsschalter-Anlage sowohl mit einer Einfach-Sammelschiene als auch mit einem Doppelsammelschienensystem ausgestattet sein kann.

## Patentansprüche

1. Gasisolierte Leistungsschalter-Anlage (LA) mit Sammelschienen (SS) und mit im gasdicht verschlossenen Behälter (BH) mit geschlossenem Gassystem angeordneten Dreistellungsschaltern (DS)und Vakuum-Leistungsschaltern (LS), wobei der Behälter (BH) Durchführungen für elektrische und mechanische Anschlüsse, insbesondere für Kabel (KA) und Antriebsmittel (AB), aufweist, wobei die Antriebsmittel (AB) für den Dreistellungsschalter (DS) und die Antriebsmittel (AL) für die Vakuum-Leistungsschalter (LS) außerhalb des Behälters (BH) angeordnet und von der Vorderseite der Leistungsschalter-Anlage (LA) zugänglich sind und die Kabelanschlüsse (KA) unterhalb der Vakuum-Leistungsschalter (LS) außerhalb des Behälters (BH) angeordnet und von der Vorderseite der Leistungsschalter-Anlage (LA) zugänglich sind, sowie mit einem Meß-, Prüf- und Verteilzwecken dienenden Niederspannungsschrank (NS),
**gekennzeichnet durch** die Merkmale
1.1. die Sammelschienen (SS) sind oberhalb des Behälters (BH) hinter dem Niederspannungsschrank (NS) angeordnet,
1.2. die Dreistellungsschalter (DS) sind im oberen Bereich des Behälters (BH) angeordnet und unmittelbar mit dem darunter positionierten Vakuum-Leistungsschalter (LS) verbunden,
1.3. die Kabelanschlüsse (KA) sind mit einer unterhalb des Behälters (BH) herausführenden Anschlußbuchse (AE) zum Anschluß eines Spannungswandlers bzw. eines Überspannungs-Ableiters verbunden.

2. Gasisolierte Leistungsschalter-Anlage nach Anspruch 1, **gekennzeichnet durch** das Merkmal
2.1. die Kabelanschlüsse (KA) sind jeweils mit einer Rohrverlängerung (RV) zum Anschluß von Doppelkabeln ausgestattet.

3. Gasisolierte Leistungsschalter-Anlage nach Anspruch 1, **gekennzeichnet durch** das Merkmal
3.1. die Sammelschienen (SS) sind durch Doppelsammelschienen realisiert.

## Claims

1. Gas-insulated circuit-breaker arrangement (LA) having busbars (SS) and having three-position disconnectors (DS) and vacuum circuit-breakers (LS) arranged in the container (BH), which is closed in a gas-tight manner and has a closed gas system, with the container (BH) having leadthroughs for electrical and mechanical connections, in particular for cables (KA) and driving means (AB), with the driving means for the three-position disconnector (DS) and the driving means (AL) for the vacuum circuit-breakers (LS) being arranged outside the container (BH) and being accessible from the front side of the circuit-breaker arrangement (LA), and the cable connections (KA) underneath the vacuum circuit-breakers (LS) being arranged outside the container (BH) and being accessible from the front side of the circuit-breaker arrangement (LA), and also having a low-voltage cabinet (NS) which is used for measuring purposes, testing purposes and distribution purposes, characterised by the features:
1.1. the busbars (SS) are arranged above the container (BH) behind the low-voltage cabinet (NS),
1.2. the three-position disconnectors (DS) are arranged in the upper region of the container (BH) and are connected directly to the vacuum circuit-breaker (LS) positioned underneath them,
1.3. the cable connections (KA) are connected to a connection bushing (AE), which is led out underneath the container (BH), for the connection of a voltage transformer or a surge diverter.

2. Gas-insulated circuit-breaker arrangement according to claim 1, characterised by the feature
2.1. the cable connections (KA) are each provided with a tube extension (RV) for the connection of double cables.

3. Gas-insulated circuit-breaker arrangement according to claim 1, characterised by the feature
3.1. the busbars (SS) are realised by double busbars.

## Revendications

1. Ensemble (LA) de sectionneurs de puissance isolé par gaz, comprenant des barres omnibus (SS), et comprenant également des sectionneurs à trois positions (DS) ainsi que des sectionneurs de puissance à vide (LS) disposés dans le récipient (BH) fermé de maniére étanche aux gaz et à systéme de gaz fermé, le récipient (BH) présentant des traversées pour des raccordements électriques et mécaniques, notamment pour des câbles (KA) et des moyens d'entraînement (AB), les moyens d'entraînement (AB) pour le sectionneur à trois positions (DS) et les moyens d'entraînement (AL) pour les sectionneurs de puissance à vide (LS) étant disposés en-dehors du récipient (BH) et étant accessibles à partir du côté avant de l'ensemble (LA) de sectionneurs de puissance, et les raccords de câbles (KA) étant disposés sous les sectionneurs de puissance à vide (LS), à l'extérieur du récipient (BH) et étant accessibles à partir du côté avant de l'ensemble (LA) de sectionneurs de puissance, cet ensemble comprenant également un coffret basse tension (NS) servant à des fins de mesure, de contrôle et de distribution,
caractérisé par les particularités suivantes
1.1. les barres omnibus (SS) sont disposées au-dessus du récipient (BH), derrière le coffret basse tension (NS),
1.2. les sectionneurs à trois positions (DS) sont disposés dans la zone supérieure du récipient (BH) et sont reliés directement au sectionneur de puissance à vide (LS) positionné en-dessous,
1.3. les raccords de câbles (KA) sont reliés à une douille de raccordement (AE) sortant sous le récipient (BH) et destinée au raccordement d'un transformateur de tension ou/et d'un éclateur de protection.

2. Ensemble de sectionneurs de puissance isolé par gaz selon la revendication 1, caractérisé par la particularité suivante
2.1. les raccords de câbles (KA) sont équipés chacun d'un prolongement tubulaire (RV) pour le raccordement de câbles doubles.

3. Ensemble de sectionneurs de puissance isolé par gaz selon la revendication 1, caractérisé par la particularité suivante
3.1. les barres omnibus (SS) sont réalisées par des barres omnibus doubles.
